# DEMANDE DE BREVET EUROPEEN

(11) **EP 0 903 289 A1**
(43) Date de publication de la demande: **24.03.1999**
(21) Numéro de dépôt: 98410100.6
(22) Date de dépôt: 10.09.1998
(51) Int. Cl.: B64D 17/02

(54) **Dispositif d'amortissement de chocs pour sellette de parapente**

(30) Priorité: 19.09.1997 FR 9711915
(71) Demandeur: SUP'AIR, 74000 Annecy (FR)
(72) Inventeur: Bouilloux, Pierre, 74540 Viuz La Chiesaz (FR)
(74) Mandataire: Gasquet, Denis

(57) **Abrégé**

Dispositif d'amortissement de chocs (1) pour sellette destinée, par exemple, à la pratique du vol libre ou du parapente, du type comportant un organe principal d'amortissement formé par au moins un matériau d'amortissement, caractérisé en ce que l'organe principal d'amortissement est disposé à l'intérieur d'une enveloppe souple (5) étanche à l'air et en ce que le dispositif comporte des moyens de gestion des flux d'air (MG) destinés à gérer les échanges d'air entre l'intérieur et l'extérieur de l'enveloppe souple (5).

## Description

La présente invention concerne un dispositif d'amortissement de chocs destiné à être disposé dans une sellette du type de celle utilisée dans les sports de vol libre, tel que le parapente, par exemple. Elle concerne également un des organes constitutifs du dispositif, à savoir, une enveloppe souple à l'intérieur de laquelle l'utilisateur peut disposer un dispositif d'amortissement traditionnel afin, notamment, d'en augmenter les performances.

Ces dernières années, la pratique du parapente s'est développée rapidement et ce loisir attire ainsi de plus en plus de pratiquants amateurs de sensations. De ce fait, le matériel utilisé par les pratiquants a considérablement été modifié et s'est modernisé durant ces dernières années. Ce développement technique a permis d'augmenter la sécurité et de diminuer les risques d'accidents. Cependant, ce sport comporte malgré tout des risques que l'on cherche à diminuer le plus possible. Pour ce faire, il existe des amortisseurs de chocs ou dispositifs d'amortissement constitués par un ou plusieurs pains de mousse destinés à être disposés dans la sellette du parapente afin d'amortir les chocs pouvant être occasionnés, notamment lors d'atterrissages difficiles.

Ces dispositifs d'amortissement de l'art antérieur permettent de minimiser les conséquences d'un choc lors d'une fausse manoeuvre à l'atterrissage, ledit choc s'effectuant généralement au niveau du bas de la colonne vertébrale puisque le pratiquant vole assis. Cependant, ces dispositifs d'amortissement de chocs présentent encore de nombreux inconvénients et leurs performances ne sont pas suffisantes pour assurer une sécurité importante à l'utilisateur.

En effet, lors d'un choc, une partie de l'énergie du choc est absorbée par les pains de mousse qui se vident de l'air qu'ils renferment en se comprimant, l'air s'échappant par les coutures du tissu qui entoure la mousse et par le tissu lui-même. Toutefois, la compression des mousses ne permet pas d'absorber une partie d'énergie suffisamment importante et l'amortissement n'est pas suffisant pour garantir un niveau de sécurité convenable à l'utilisateur.

De plus, ces dispositifs d'amortissement présentent un volume important, ce qui constitue un inconvénient majeur pour les pratiquants car ceux-ci disposent dans leur sac d'un volume limité pour ranger la sellette, la voile, et ses suspentes ainsi que le parachute de secours, et ne peuvent que très difficilement faire tenir ce dispositif en supplément.

Ainsi, l'invention se propose de résoudre les problèmes précités des dispositifs d'amortissement traditionnels grâce à des moyens simples, fiables, destinés, d'une part à obtenir une capacité d'amortissement plus importante, et d'autre part à faciliter son utilisation en réduisant considérablement son volume, de manière à ce qu'il puisse être introduit facilement dans les sacs des parapentistes.

Un autre avantage de l'invention est qu'elle permet également de conserver un dispositif d'amortissement de chocs traditionnel et d'y adapter l'un des éléments de l'invention afin d'en améliorer les performances et de diminuer le volume occupé lorsque l'on ne l'utilise pas. Notons également que ce dispositif permet de mieux répartir le choc dans l'intégralité du dispositif.

Ainsi selon sa caractéristique principale, le dispositif d'amortissement de chocs pour sellette destinée par exemple, à la pratique du vol libre ou du parapente, est du type comportant un organe principal d'amortissement formé par au moins un matériau d'amortissement et est caractérisé en ce que l'organe principal d'amortissement est disposé à l'intérieur d'une enveloppe souple étanche à l'air et en ce que le dispositif comporte des moyens de gestion des flux d'air destinés à gérer les échanges d'air entre l'intérieur et l'extérieur de l'enveloppe souple.

Selon un mode de réalisation du dispositif d'amortissement de chocs, l'organe principal d'amortissement a la forme d'une assise et possède un profil en coupe longitudinale en forme de croissant sensiblement bombé dans sa zone centrale.

Selon une caractéristique complémentaire du dispositif selon l'invention, les moyens de gestion des flux d'air comportent au moins une valve disposée sur l'enveloppe souple.

Selon un mode de réalisation du dispositif d'amortissement de chocs, les moyens de gestion des flux d'air comportent deux valves disposées latéralement sur les flancs de l'enveloppe souple du dispositif.

Selon une autre caractéristique du dispositif d'amortissement de chocs selon l'invention, il comporte un dispositif de sécurité destiné à permettre l'évacuation de l'air contenu dans l'enveloppe souple lorsque la pression interne est supérieure à un seuil de pression choisi.

Selon une variante d'exécution, le dispositif de sécurité est constitué par une ouverture de l'enveloppe souple destinée à être enroulée sur elle-même ou autour d'un support plat avant d'être fixée sur la face externe de ladite enveloppe par l'intermédiaire de moyens de fixation destinés à se détacher de manière à libérer l'ouverture lorsque la pression interne est supérieure au seuil de pression choisi.

Selon un perfectionnement du dispositif d'amortissement de chocs, il comporte des moyens de répartition du choc tel qu'une plaque de répartition disposée sur la partie dorsale de l'organe principal d'amortissement ou de l'enveloppe et destinée à répartir l'onde de choc sur l'ensemble de l'organe principal d'amortissement.

Selon le mode de réalisation préféré du dispositif d'amortissement de chocs, l'enveloppe souple est réalisée en tissus hermétique à l'air tels que des tissus en polychlorure de vinyle, par exemple, et est constituée en plusieurs éléments assemblés ensemble par un procédé de soudage à haute fréquence.

Par ailleurs, l'invention concerne également l'un des éléments constitutifs du dispositif pris isolément, à savoir, une enveloppe souple telle que décrite précédemment destinée à être disposée puis refermée autour d'un dispositif d'amortissement traditionnel.

Selon une caractéristique de l'enveloppe souple, elle possède une ouverture d'introduction destinée à permettre l'introduction du dispositif traditionnel à l'intérieur de celle-ci, cette ouverture constituant en partie un dispositif de sécurité pour le dispositif d'amortissement de chocs.

D'autres caractéristiques et avantages de l'invention se dégageront de la description qui va suivre en regard des dessins annexés qui ne sont donnés qu'à titre d'exemples non limitatifs.

Les figures 1 à 8 illustrent différents modes d'exécution d'un dispositif selon l'invention.

La figure 1 représente en perspective un parapentiste dans sa sellette.

La figure 2 représente en perspective le dispositif d'amortissement.

La figure 3 représente en coupe longitudinale le dispositif d'amortissement.

La figure 4 illustre en perspective les flux d'air à l'intérieur du dispositif lors d'un choc.

La figure 5a illustre en perspective le dispositif d'amortissement muni de ses moyens de fixation et de son dispositif de sécurité en position fermée.

La figure 5b illustre en perspective le dispositif d'amortissement muni de ses moyens de fixation et de son dispositif de sécurité en position ouverte

La figure 6 représente en coupe longitudinale le dispositif d'amortissement muni d'un organe de répartition du choc.

La figure 7a représente une enveloppe souple selon l'invention destinée à être disposée sur un dispositif d'amortissement traditionnel.

La figure 7b illustre en coupe longitudinale le dispositif d'amortissement traditionnel et son enveloppe souple.

La figure 8 représente en perspective un dispositif traditionnel muni d'une enveloppe souple selon l'invention et une sellette destinée à recevoir le dispositif.

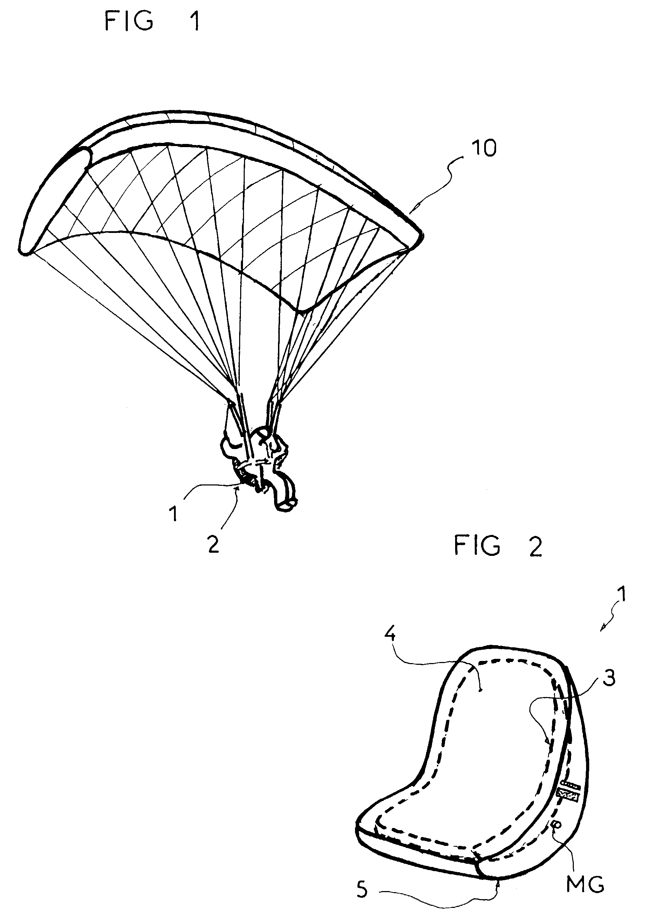

Le dispositif d'amortissement de chocs selon l'invention, portant la référence générale (1), est destiné à équiper une sellette (2) et préférentiellement une sellette du type de celles utilisées pour la pratique du vol libre et du parapente (10), comme le montre la figure 1. Il va de soi qu'un dispositif de ce type pourrait être également utilisé dans des sellettes destinées à des travaux de manutention aériens ou dans toute autre sellette ou harnais.

Selon l'invention, le dispositif d'amortissement de chocs (1) comporte un organe principal d'amortissement (3) formé au moins en partie par un matériau (4) possédant des capacités d'amortissement importantes. Le dispositif comporte avantageusement une enveloppe souple (5) à l'intérieur de laquelle est disposée l'organe principal d'amortissement (3), ladite enveloppe étant étanche à l'air sur l'ensemble de sa surface et possédant des moyens de gestion des flux d'air (MG) destinés à réguler les transferts d'air entre l'intérieur de l'enveloppe et l'extérieur, comme le montre la figure 2. Cette régulation pouvant intervenir, par exemple, lors d'un choc ou lorsque l'utilisateur veut ranger le dispositif dans le sac qu'il utilise pour le transport du parapente (10).

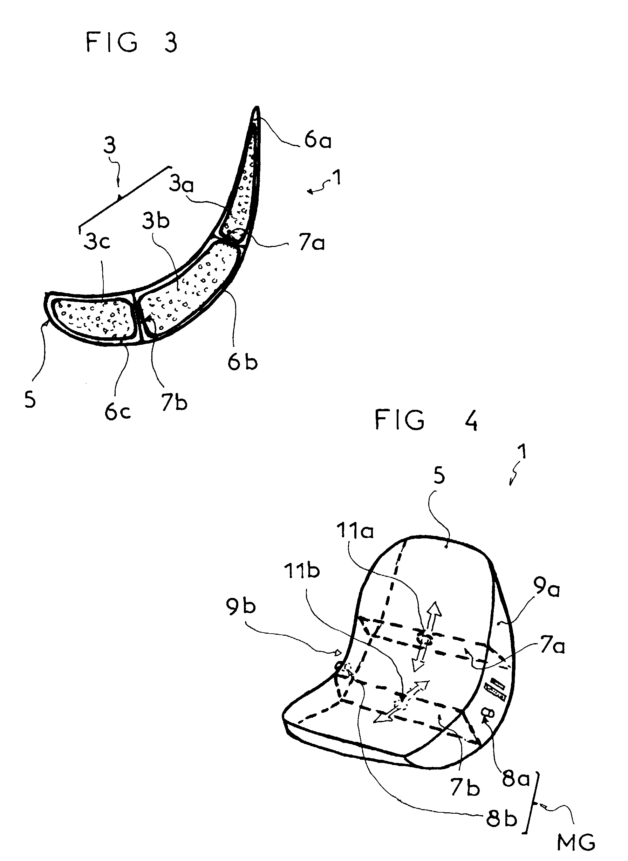

Selon le mode de réalisation préféré du dispositif et tel qu'illustré figures 2 et 3, celui-ci a la forme d'une assise ou d'un siège et possède avantageusement dans un plan longitudinal un profil en forme de croissant bombé dans sa partie centrale. Il va de soi que la forme du dispositif pourrait être différente s'il était destiné à des sellettes ou harnais où le positionnement de l'usager était différent comme, par exemple, couché.

Selon le mode de réalisation préféré du dispositif d'amortissement de chocs (1) pour sellette (2), le matériau d'amortissement (4) ou matériau de remplissage constituant l'organe principal d'amortissement (3) est avantageusement une mousse à cellule ouverte comme, par exemple, une mousse couramment nommée BULTEX (marque déposée) dans la profession et qui conserve sa forme initiale malgré les compressions importantes que l'on exerce sur elle. Elle peut, comme toute mousse à cellule ouverte, emmagasiner de l'air pour le restituer lors d'une compression due à un choc ou autre avant de reprendre sa forme naturelle initiale.

L'enveloppe souple (5) selon l'invention possède des dimensions et une forme sensiblement identiques à celles de l'organe principal d'amortissement (3), c'est-à-dire en forme de croissant bombé. Elle est formée par un tissu étanche à l'air comme, par exemple, un tissu en polychlorure de vinyle ou "PVC" et peut être constituée de plusieurs morceaux soudés entre eux par un procédé de soudage à haute fréquence de manière à obtenir une parfaite étanchéité de l'enveloppe à l'air, celui-ci ne pouvant ni fuir à travers le tissu, ni s'échapper au travers des "coutures" réalisées par soudage.

Selon l'invention, l'organe principal d'amortissement (3) peut être constitué par plusieurs organes élémentaires d'amortissement tels que des pains de mousse (3a, 3b, 3c), comme le montre la figure 3, ceux-ci étant, par exemple, disposés dans des compartiments cloisonnés (6a, 6b, 6c) de forme complémentaire de manière à constituer un organe principal d'amortissement de la forme désirée. Ces compartiments sont obtenus à l'aide de cloisons souples (7a, 7b).

Selon l'invention, les moyens de gestion des flux d'air (MG) sont constitués en partie par une ou plusieurs valves (8a, 8b) destinées à réguler la fuite d'air en fonction de la pression interne de l'enveloppe souple (5). Selon le mode de réalisation illustré figures 1 et 4, le dispositif (1) comporte deux valves (8a, 8b) avantageusement disposées latéralement sur les flancs (9a, 9b) de l'enveloppe souple (5). Il va de soi que le nombre de valves ainsi que leur positionnement pourraient être différents, sans pour autant sortir du champ de protection de l'invention.

Ces valves (8a, 8b) permettent de gérer le passage de l'air de l'intérieur vers l'extérieur et inversement et comportent une position fermée ou des moyens d'obturation tels que des bouchons destinés à empêcher le passage de l'air de manière à rendre l'enveloppe souple (5) parfaitement hermétique. De ce fait, lorsque l'utilisateur veut transporter le dispositif (1), il lui suffit de le compresser de manière à évacuer l'air présent dans l'enveloppe, puis à fermer les valves (8a, 8b) empêchant ainsi l'organe principal d'amortissement (3), c'est-à-dire la mousse, de se regonfler d'air. Ainsi, le volume occupé par le dispositif d'amortissement (1) est réduit au minimum et ne constitue plus une gêne dans le matériel du pratiquant.

Notons que l'utilisation de mousses à cellule ouverte pour effectuer l'organe principal d'amortissement (3) permet d'obtenir sans difficulté le regonflage du dispositif (1) lors de son utilisation, grâce à sa tendance naturelle à reprendre sa forme initiale lorsque l'on ouvre les valves (8a, 8b).

De cette façon, lors d'un choc, les valves (8a, 8b) permettent l'évacuation de l'air de manière régulée obtenant ainsi une augmentation de la capacité d'amortissement du dispositif et donc améliorant ses performances.

Par ailleurs et comme le montre la figure 4, le dispositif comporte des moyens de gestion secondaire (11a, 11b) des flux d'air internes à l'enveloppe souple, de manière à gérer le passage de l'air entre les compartiments cloisonnés (6a, 6b, 6c). Ces moyens pouvant, par exemple, être constitués par un ou plusieurs orifices (11a, 11b) disposés dans les cloisons souples (7a, 7b) séparant les compartiments.

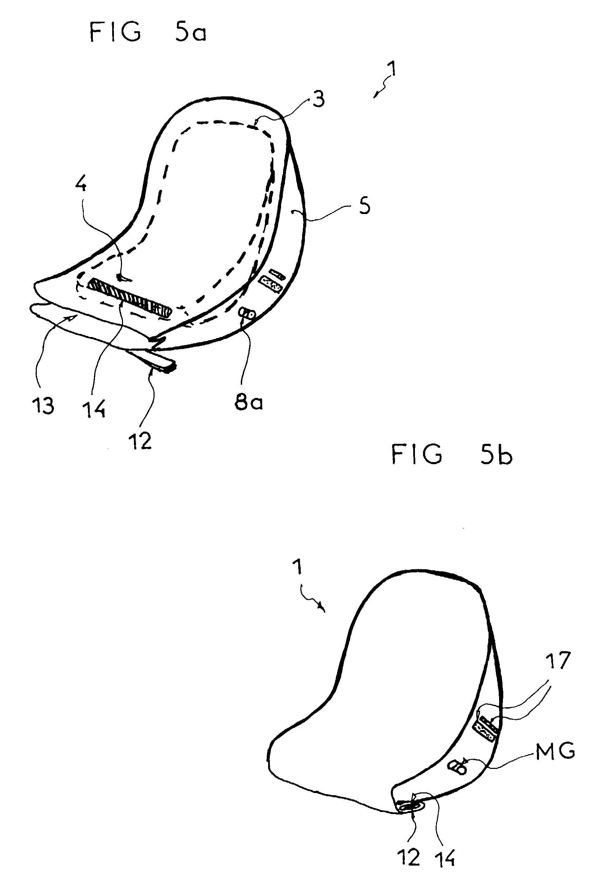

Selon le mode de réalisation préféré de l'invention, l'enveloppe souple (5) est constituée en plusieurs parties soudées, tel que précédemment décrit. Elle peut comporter également un dispositif de sécurité (12, 13, 14) destiné à éviter l'éclatement du dispositif lorsque la pression interne est trop élevée. Ce dispositif de sécurité fonctionne avantageusement sur le principe du tout ou rien et peut être constitué, par exemple, par une ouverture (13) de l'enveloppe souple, destinée à être obturée en étant roulée à plat sur plusieurs tours autour d'un support plat (12) avant d'être fixée à une zone externe de l'enveloppe par des moyens de fixation (14), tel qu'illustré figures 5a et 5b. Selon l'invention, lesdits moyens de fixation sont prévus pour résister à la pression de l'enceinte jusqu'à un certain niveau de pression, puis se défont de manière à laisser l'air s'échapper par l'ouverture (13) au lieu d'endommager le dispositif (1). Ainsi, ce dispositif de sécurité constitue également une partie des moyens de gestion des flux d'air (MG). Pour ce faire, il peut être prévu une attache par bande d'accrochage rapide du type "Velcro" dont les dimensions peuvent être calculées notamment en fonction du seuil à l'arrachement que l'on désire.

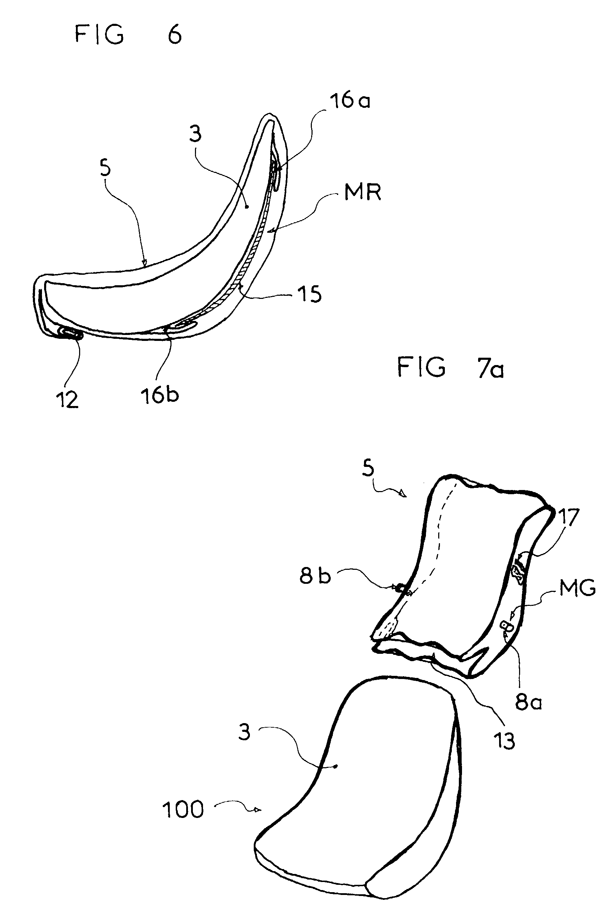

Selon le mode de réalisation préféré, le dispositif d'amortissement de chocs (1) comporte des moyens de répartition (MR) du choc destinés à répartir uniformément le choc sur l'ensemble de l'organe principal d'amortissement (3) plutôt que sur un point précis de ce dernier. Ces moyens de répartition (MR) peuvent être disposés sur la face externe de l'enveloppe souple (5) ou, comme le montre la figure 6, à l'intérieur de celle-ci sur la partie dorsale de l'organe principal d'amortissement (3). Selon cette variante illustrée, les moyens de répartition du choc sont constitués par une paroi (15) ou plaque épousant la forme de la partie arrière du dispositif (1) de manière à répartir l'onde de choc. Cette plaque (15) peut être constituée en fibre ou tout autre matériau et être disposée de manière amovible ou non sur le dispositif grâce à des logements d'extrémité (16a, 16b) disposés sur l'arrière de l'organe principal d'amortissement (3) ou de l'enveloppe souple (5).

Par ailleurs, l'invention concerne également, comme le montrent les figures 7a et 7b, une enveloppe souple (5) munie de moyens de gestion des flux d'air (MG), telle que celles décrites précédemment, et destinée à envelopper un dispositif d'amortissement (100) de l'art antérieur formé par un organe principal d'amortissement (3). Cette enveloppe souple permet, d'une part, d'améliorer sensiblement les capacités d'amortissement d'un tel dispositif et, d'autre part, de pouvoir comprimer le dispositif avant de fermer les échanges d'air, de manière à maintenir l'organe principal d'amortissement comprimé, celui-ci occupant ainsi un volume réduit pour permettre son rangement. L'ouverture des valves (8a, 8b) permet à l'utilisateur de remettre automatiquement en forme son dispositif d'amortissement grâce à l'organe principal d'amortissement (3) qui a naturellement tendance à emmagasiner de l'air pour retrouver sa forme initiale. Notons que pour pouvoir introduire le dispositif traditionnel (100) à l'intérieur de l'enveloppe souple (5), celle-ci possède avantageusement une ouverture d'introduction (13) de taille suffisante, ladite ouverture d'introduction pouvant également constituer une partie d'un dispositif de sécurité tel que celui décrit précédemment.

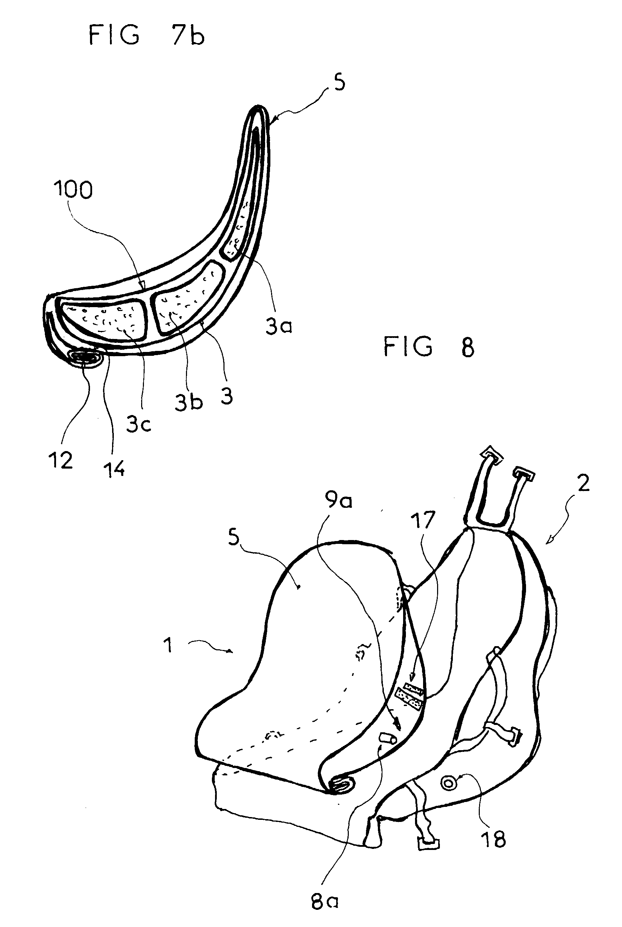

Le dispositif d'amortissement de chocs (1) est destiné à être fixé dans une sellette (2) ; il peut être disposé devant ou derrière la sellette selon les modèles. Selon une variante d'exécution, il peut avantageusement être disposé sur l'avant de la sellette (2). Pour ce faire, le dispositif d'amortissement de chocs (1) comporte des moyens d'accrochage destinés à coopérer avec des moyens complémentaires situés sur la sellette. Selon le mode de réalisation préféré, ces moyens d'accrochage peuvent être constitués par des bandes d'accrochage rapide de type "Velcro" (17) par exemple situées sur les flancs (9a, 9b) de l'enveloppe souple (5) avantageusement dans la zone centrale de ceux-ci, tel qu'illustré figure 8. Notons, par ailleurs, que dans ce mode de réalisation, la sellette (2) est munie d'orifices latéraux (18) destinés au passage des valves (8a, 8b). Il va de soi que les moyens d'accrochage et l'endroit où l'on dispose le dispositif d'amortissement pourraient être différents. De même, la localisation des valves (8a, 8b) pourrait également être différente en fonction de la configuration de la sellette pour laquelle elle est destinée, par exemple.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Dispositif d'amortissement de chocs (1) pour sellette (2) destinée, par exemple, à la pratique du vol libre ou du parapente (10), du type comportant un organe principal d'amortissement (3) formé par au moins un matériau d'amortissement (4), caractérisé en ce que l'organe principal d'amortissement (3) est disposé à l'intérieur d'une enveloppe souple (5) étanche à l'air et en ce que le dispositif comporte des moyens de gestion des flux d'air (MG) destinés à gérer les échanges d'air entre l'intérieur et l'extérieur de l'enveloppe souple (5).

2. Dispositif d'amortissement de chocs (1) selon la revendication 1, caractérisé en ce que l'organe principal d'amortissement (3) à la forme d'une assise et possède un profil en coupe longitudinale en forme de croissant sensiblement bombé dans sa zone centrale.

3. Dispositif selon l'une quelconque des revendications précédentes, caractérisé en ce que les moyens de gestion des flux d'air (MG) comportent au moins une valve (8a, 8b) disposée sur l'enveloppe souple (5).

4. Dispositif d'amortissement de chocs (1) selon la revendication 3, caractérisé en ce que les moyens de gestion des flux d'air (MG) comportent deux valves (8a, 8b) disposées latéralement sur les flancs (9a, 9b) de l'enveloppe souple (5) du dispositif.

5. Dispositif d'amortissement de chocs (1) selon l'une quelconque des revendications précédentes, caractérisé en ce qu'il comporte un dispositif de sécurité (13, 14) destiné à permettre l'évacuation de l'air contenu dans l'enveloppe souple (5) lorsque la pression interne est supérieure à un seuil de pression choisi.

6. Dispositif d'amortissement de chocs (1) selon la revendication 5, caractérisé en ce que le dispositif de sécurité (12, 13, 14) est constitué par une ouverture (13) de l'enveloppe souple (5) destinée à être enroulée sur elle-même ou autour d'un support plat (12) avant d'être fixée sur la face externe de ladite enveloppe par l'intermédiaire de moyens de fixation (14) destinés à se détacher de manière à libérer l'ouverture (13) lorsque la pression interne est supérieure au seuil de pression choisi.

7. Dispositif d'amortissement de chocs (1) selon l'une quelconque des revendications précédentes, caractérisé en ce qu'il comporte des moyens de répartition du choc (15) tel qu'une plaque de répartition disposée sur la partie dorsale de l'organe principal d'amortissement (3) ou de l'enveloppe (5) et destinée à répartir l'onde de choc sur l'ensemble de l'organe principal d'amortissement (3).

8. Dispositif d'amortissement de chocs (1) selon l'une quelconque des revendications précédentes, caractérisé en ce que l'enveloppe souple (5) est réalisée en tissus hermétique à l'air tels que des tissus en polychlorure de vinyle (PVC), par exemple, et est constituée en plusieurs éléments assemblés ensemble par un procédé de soudage à haute fréquence.

9. Enveloppe souple (5) selon l'une quelconque des revendications précédentes, destinée à être disposée puis refermée autour d'un dispositif d'amortissement traditionnel (100).

10. Enveloppe souple (5) selon la revendication 9 caractérisée en ce qu'elle possède une ouverture d'introduction (13) destinée à permettre l'introduction du dispositif traditionnel (100) à l'intérieur de celle-ci, cette ouverture (13) constituant en partie un dispositif de sécurité pour le dispositif d'amortissement de chocs (1).
